# EUROPEAN PATENT SPECIFICATION

(11) **EP 0 400 229 B1**
(45) Date of publication and mention of the grant of the patent: **23.03.1994**
(21) Application number: 89305439.5
(22) Date of filing: 30.05.1989
(51) Int. Cl.: F16K 27/04, F16K 3/12

(54) **Gate valve**
Schieberventil
Vanne à tiroir

(43) Date of publication of application: 05.12.1990
(73) Proprietor: 354001 ALBERTA LIMITED, Edmonton Alberta T6E 6A8 (CA)
(72) Inventor: Clayson, Peter D, 8657-51 Avenue Edmonton Alberta T6E6A8 (CA)
(74) Representative: Copp, David Christopher

(56) References cited:
- FR-A- 1 260 729
- FR-A- 2 044 042
- US-A- 3 249 117
- US-A- 3 963 214

## Description

The present invention relates to high-pressure, high-temperature gate valves, particularly for use in high pressure systems such as those found in steam boilers, oil refineries and oil fired steam injection systems.

Heretofore, with conventional commercial high-pressure, high-temperature gate valves, the valve body has been split horizontally, and consists primarily of a cast or forged body and a bonnet. However, with such horizontally split valves, the machining of the valve chamber is virtually impossible and at best, extremely difficult and expensive, and thus, heretofore, such valve chambers have had rough cast surfaces, and with such valves there is a tendency of fluids passing through the valve to wash out the valve-seats and distort the gate.

US-A-3,963,214 describes a vertically split gate valve for use in carrying mains fluids under pressure, such as mains in water distribution systems. However, its construction is such that it would not be capable of use in high pressure applications, such as steam systems where the safety standards are extremely stringent.

In accordance with the present invention, a gate valve comprises a valve body having a main body portion containing a valve chamber completely open on one side wall of the valve body such that the whole of the valve chamber is exposed and accessible for machining thereof, and a neck portion defined by a neck wall, said open side wall being machined to provide a flat mating surface surrounding said open valve chamber, said main body portion having inlet and outlet ports and a transverse passage extending therebetween, a valve gate member guided vertically in said valve chamber and movable between an open position, in which said gate member is above said transverse passage, and a closed position, in which said gate member obstructs said passage to prevent fluid flow therethrough, said valve gate member having a smooth flat-faced downstream wall, which in the closed position seats on a flat-faced seat surrounding said passage, and having a wedge-shaped upstream wall, which cooperates with a wedge-shaped wall in said chamber to force the downstream wall sealingly onto the flat-faced seat, a valve stem guided in said neck portion, said valve stem extending into said valve chamber, said valve stem having a threaded lower end cooperating with a threaded recess in said gate member, and said stem being rotatable in a bearing means in said neck portion to raise and lower said gate member between said open and closed positions, said open side of said main body portion being closed by a removable closure plate having a flat surface mating with the corresponding flat surface on said main body portion, clamping means for clamping said closure plate firmly to said main body portion.

The invention is characterized in that in order to make the valve suitable for use in high pressure steam systems and the like, and only the portion of the valve body surrounding said valve chamber is open and surrounded by the flat mating surface, the neck wall is in the form of an integral, unbroken wall completely surrounding said valve stem, the closure plate has a protuberance on an inner surface thereof, which is slidable into the open side of the valve chamber so as to partially penetrate said valve chamber and become snugly located therein, said mating flat surfaces of said closure plate and said main body portion enclose a recess surrounding the valve chamber, and a seal is trapped in said recess surrounding the valve chamber under the action of said clamping means to prevent leakage of high pressure fluid from said valve chamber. In this valve the closure member can be removed to expose the whole of the interior of said valve chamber to permit machining thereof, and clamped in position on the main body portion to permit operation in high pressure steam systems and the like.

By providing the closure plate on the side of the main body portion of the valve body on which main body portion is integrally mounted the neck portion, and which main body portion includes the valve chamber, the valve stem, gate and a seat, which closure plate provides one of the walls of the valve chamber and is removably clamped to the side of the main body portion, such as by means of bolts, through mating flat surfaces such that on removal of the closure plate the whole of the valve chamber becomes exposed, it is possible to easily completely and accurately machine the valve chamber in the main body portion, and also on the inside wall of the closure plate, so as to provide a valve cavity and seats at relatively small expense.

The chamber also provides a precise guide for the valve gate member, and does not have the rough cast urfaces of the prior art horizontally split gate valves. The chamber of the valve which contains all the moving parts may be thus completely machined ensuring consistent wall thickness. The elimination of rough cast surfaces in the cavity reduces the tendency for fluids to cavitate and wash out the valve seats and distort the gate. Thus, due to the particular construction of the valve body, the machine produces a valve chamber to a very fine tolerance which ensures an accurate f it of the valve seat in the valve chamber, and a closer fit between the valve gate and the valve seat. The fine tolerance achieved by the machining permits interchangeability of parts in the valves of the same port diameter. This is in contrast to the conventional cast gate valves, having a horizontal split in the valve body, which are manufactured in a manner which requires trial and error fit of the valve seat and the valve body, and a significant increase in the cost of manufacturing that portion of the valve.

The valve of the present invention may be manufactured in practically any material that is presently available. Since all the parts are machined the operator of the plant can stock items which will fit many of the valves and eliminate the current need to transport valves from the field, sometimes by air, for repair. The accuracy of the machining process involved in the manufacture of all the parts allows the chamber to serve as a guide for the gate and limit wear and tear on the valve stem. A precise machine fit will result in reduced shear stress on the bolts and contributes to the valve's advantage in high pressure situations. The valve of the present invention may be manufactured from a forging with internal chambers and parts completely machined and therefore can be made from any material that can be forged and indeed can be manufactured from bar stock and therefore any material which can be machined.

Further, as the gate valve is adapted for use in high-pressure, high-temperature systems, such as high-pressure steam systems, a trapped seal is provided in a recess between the closure plate and the main body portion, which prevents the escape of high-pressure steam between the flat surfaces of the closure plate and the main body portion of the valve. The trapped seal is trapped in a groove such that it cannot be sucked into the valve chamber through the port under suction, nor can it be blown out from between the mating surfaces by the high-pressure in the valve. Desirably the seal between the mating surfaces, is trapped between the protuberance on the closure plate in a recess in the edge of the main body portion around the chamber. Without such a seal the valve could not operate in high-pressure, high-temperature systems. Further as aforesaid in order to provide such a seal, and at the same time to provide a machined face for the valve chamber, the closure plate is provided with a protuberance which locates in the main body portion and in the valve chamber. This has the further advantage that it also resists both lineal and radial shear stresses which may be applied to the valve during its installation and use in high-pressure, high-temperature systems. Further, on removal of the closure plate, easy access can be had to the valve seat in the valve chamber, and thus, a replaceable flat valve seat can be present which can be changed very readily, and thus, the life of the valve can be substantially extended.

With the prior art, horizontally split valves, wearing out of the valve seat in the valve usually signals the end of the useful life of the valve.

Heretofore in many gate valves the opposite surfaces of the gate of the valve which closes the ports of the valve by seating on a valve seat have been either parallel to each other or to improve the seating pressure of the gate have been wedge-shaped such that the gate in cross-section has a V shape and seats on appropriately shaped valve seats. However, with such a V-shaped gate, immediately on movement of the gate from its closed position towards its open position, fluid under high-pressure proceeds to pass around the gate causing turbulence and cavitation in the downstream port of the valve which is undesirable.

In a preferred embodiment of the present invention there is provided a gate valve member in the present gate valve which is adapted to seat on the valve seat in the closed position with good sealing pressure and in which the movement of fluid under pressure is prohibited until the downstream port starts to open which causes an increase in pressure on the gate forcing it against the smooth surface of the body of the valve and thus reduces cavitation. Thus, the gate has a flat faced downstream wall which in the closed position seats on a flat faced seat surrounding the passage and has a wedge-shaped upstream wall which cooperates with a wedge-shaped wall in said chamber to force said downstream wall onto said flat seat whereby said fluid is only able to pass through said passage when the lower end of said gate is above the lower portion of the wall of said passage thus reducing cavitation. Thus, the valve uses a flat faced gate seating on a flat and preferably interchangeable seat, the gate having a wedge-shape on the upstream side which assists in forcing the seating surfaces together which is highly desirable in high-pressure conditions. The inlet and outlet ports are completely covered in the closed position which enables the valve to withstand extreme pressures. Thus, in a preferred embodiment of the present invention the closure plate includes one of the inlets and outlets and more desirably the closure plate includes the wedge-shaped wall of the chamber, which can therefore be readily machined to fine tolerances on the flat surface of the closure plate.

In a further embodiment of the present invention the seat is removably attached in said chamber around the passage and suitably the seat is a separate part. This exchangeable seat facilitates repair and the seat can be made of any number of materials to best resist abrasion and/or corrosive fluids or gases. The valve gate suitably has metal-to-metal seating surfaces and utilizes upstream pressure to assist seating and this pressure is not released until the gate starts to uncover the port and as such wash conditions are minimized.

High-pressure gate valves should desirably meet the standard set by ANSI as set forth in publication B. 16-34 or API standard 6D namely that the packing in the stuffing box forming the bearing for the valve stem of the high-pressure gate valve should be changeable whilst the valve is in service. Heretofore, high-pressure gate valves have been devised to meet such standards in which the packing is changeable when the valve is in the fully closed condition, i.e. the valve plate has closed the passage. Alternatively high-pressure gate valves have been devised in which the packing is changeable when the valve is in the fully open condition. Such valves have the disadvantage that in many high-pressure systems it is often times desirable to change the packing when the valve is in the fully open condition and at other times when the valve is in the closed condition. This has not heretofore been provided for by a single gate valve.

In a further embodiment of the invention is provided a high-pressure valve in which the packing is removable from the stuffing box in both the closed and fully opened conditions of the valve by isolation of the stuffing box from the valve chamber in either condition.

Thus, in this aspect of the present invention the valve stem means includes a valve stem extending through said chamber and said body having a threaded lower end cooperating with a threaded recess in said gate, said stem being rotatable in a bearing means in said body to raise and lower said gate between said open and closed positions, said bearing means including a stuffing box means having packing therein, a lower seat and an upper seat through which said stem extends, said stem including a double acting integral collar located between said seats, said collar having tapered shoulders which forms a self-aligning seal with said upper and lower seats.

In a preferred embodiment of the present invention the upper seat is provided by the stuffing box which has a flange extending downwardly from the bottom thereof defining with the valve body a cavity containing the collar with a sealing means trapped in a recess between said flange and said neck portion.

In a further embodiment of the present invention said stuffing box means comprises a ductile seal bushing defining with said neck portion a stuffing box including said packing and having downwardly extending flanges defining with said neck portion, said cavity having said collar located therein and a retainer ring adapted to be adjustably mounted in said neck portion to apply downward direct pressure on said bushing to effect a seal between said bushing and said neck portion.

The packing of the stuffing box of the valve of the present invention suitably utilizes pressure activated packing which is capable of containing high-pressure and has an integral collar on the stem and complimentary seats in the body and stuffing box to form back pressure seats in either the open or closed positions such that pressure is only applied to the packing when the gate is travelling from the open to the closed positions or vice versa. Thus, the stuffing box has a back seat in both the open and closed position which limits pressure on the packing to periods when the gate is moving between the open and closed positions. The limited pressure on the packing permits it to be changed while the valve is opened or closed without removing the pressure in the valve or removing the valve from the line. The packing rings of the packing are suitably single complete pieces rather than being split, thus the stuffing box is completely isolated from the body cavity when in the extreme open or closed positions.

Further heretofore, in high-pressure gate valves the cooperating sealing surfaces isolating the stuffing box from the valve chamber in either the open or closed condition of the valve have had the tendency to leak high pressure fluid therethrough due to very high pressure necessary between the cooperating surfaces which leakage is undesirable. It has been found in accordance with a further particularly desirable embodiment of the present invention that when the tapered shoulders of the double acting collar are moved into line sealing abutment with seats consisting of right angled edges around apertures suitably in the body of the valve and in the stuffing box through which the valve stem passes that the leakage of fluid under high-pressure is substantially eliminated. This line seal abutment for high-pressure gate valves is highly desirable as with abutting ground faces they have to be ground with precise tolerances to avoid leakage of the high-pressure steam and such faces tend to wear with use considerably shortening the life of the valve.

Further in another preferred embodiment of the present invention the stuffing box is of cylindrical configuration with the base of the box spaced upwardly from the lower end thereof leaving downwardly dependent flange having a lower annular end recessed to receive an annular gasket, the flange defining with the body of the valve a cavity through which the valve stem extends and which accommodates the collar on the stem, the outer surface of the upper end of the cylinder being in threaded engagement with the inner threaded surface of a cylindrical upstanding portion of the body of the valve. The presence of the gasket between the stuffing box and the body of the valve prevents leakage of fluid under pressure around the stuffing box and the mounting of the stuffing box in the body by means of the threaded portion at the upper end thereof avoids distortion of the gasket during the mounting of the stuffing box in the body of the valve.

The present invention will be further illustrated by way of the accompanying drawing, in which:-
Figure 1 is a sectional side-view taken along the line A-A in Figure 2 of a high-pressure, high-temperature gate valve according to a preferred embodiment of the present invention in the closed condition;
Figure 2 is a sectional end-view taken along the line B-B in Figure 1;
Figure 3 is a sectional side view taken along line C-C in Figure 4 of the gate valve of Figure 1 in the open position;
Figure 4 is a sectional end view taken along line D-D in Figure 3;
Figure 5 is an enlarged detail of the bearing of the stem bearing of the gate valve of Figures 1 to 4; and
Figure 6 is an enlarged detail of a bearing according to a further embodiment of the present invention.

Referring to the accompanying drawings, the gate valve comprises a valve body 1 having a horizontal passage 3 therethrough defining upstream and downstream ports and having threaded ends 2 for connecting to the conduits of a high-temperature, high-pressure system. The ports are opened and closed by a gate 4 having a flat smooth downstream surface 5 seating on a removable valve seat 6 disposed around the passage 2. Thus, the seat 6 is a separate part that fits precisely into the machined ledge in the valve body 1, therefore, can be replaced or constructed of any suitable material depending upon the application. The gate 4 in the closed position has its lower end extending into a recess 7 in the wall of the passage 2, which recess 7 forms part of the valve chamber 8 in which the gate 4 moves between its open and closed positions. The upstream face 21 of the valve gate 4 has a wedge-shape which cooperates with a similar surface 22 in the chamber 8 which provides sealing pressure for a tight seal between the downstream face 5 of the valve seat 6 and provides with the recess 7 of the chamber 8 that the ports are completely opened or totally covered when closed which enables it to stand extreme pressures. The movement of the gate 4 between the open and closed position is effected by means of turning a hand wheel 9 mounted on a valve stem 10 having a threaded lower end 11 which turns in a threaded recess in the gate 4, the stem 10 also having a double acting collar 12 disposed in a cavity between a line seat 13 formed on edge in a neck portion 101 of said body 1, the neck portion having an integral, unbroken neck peripheral wall, and a line seat 14 formed by an edge of a stuffing box body 15 screwed into the neck portion defined by an integral, unbroken neck wall 101 by an externally threaded upper end into an internally threaded cylindrical portion of said body 1 and defining a cavity accommodating said collar 12.

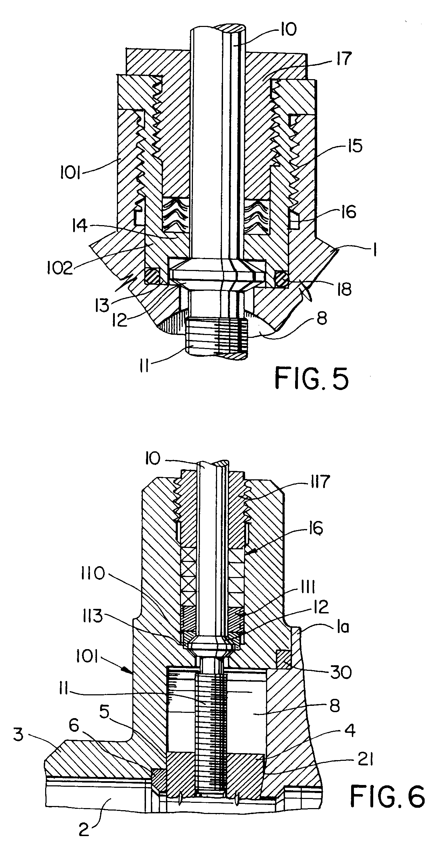

Referring particularly to Figure 5 the stuffing box body 15 contains a Chevron-style packing 16 which is pressure energized and held in by a packing gland 17 screwed into aid stuffing box body 15 forming a bearing for the valve stem 10. The stuffing box body 15 has a downwardly extending flange 102 defining said cavity which is sealed by an O-ring 18 which is suitably a soft iron ring or a stainless steel spiral iron ring between its recessed lower end and said neck portion 101 of said valve body 1. The double acting collar 12 serves as a thrust bearing but also has tapered shoulders, suitably at about 300 which allow a self-aligning line seal and seat on two-way back seal seats 13 and 14 formed by right angled edges in neck portion 101 and the stuffing box 15 where the stem 10 passes therethrough when the valve gate 4 is in its closed position when the back seal seat 13 is effective, thereby isolating the stuffing box without leakage of fluid under pressure from the chamber except when the gate 4 is travelling between the open and closed positions. Thus the stuffing box is completely isolated in such position from the fluid pressure in the valve providing for the capability of changing the packing when required without removing the valve from the line in the open or closed condition thus meeting the requirements of ANSI as set forth in publication B-16-34 or API in standard 2D and thus providing for simplicity of surface when required.

Referring to Figure 6, the double acting collar 12 is disposed between a seat formed by the neck portion 101 and a seat formed by a pearlitic ductile iron grade seal bushing 110 which is slidably disposed in the neck portion 101 with the lower end of downwardly extending flanges 113 accommodated in a dimensioned recess in the neck portion 101. Pressure is adjustably applied to the seal bushing 110 by a retainer ring 111 screwed into the neck portion 101 to provide a high pressure steam tight seal with the neck portion 101. The seal 110 and the retainer ring 111 define with the neck portion a stuffing box containing the packing 16 which is held by a gland screw 117.

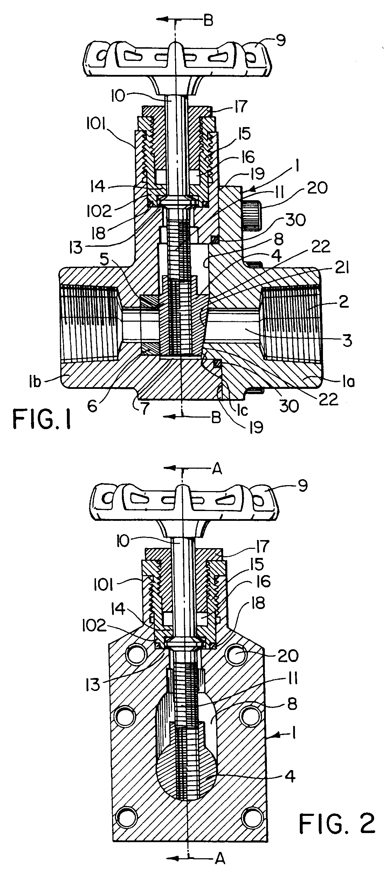

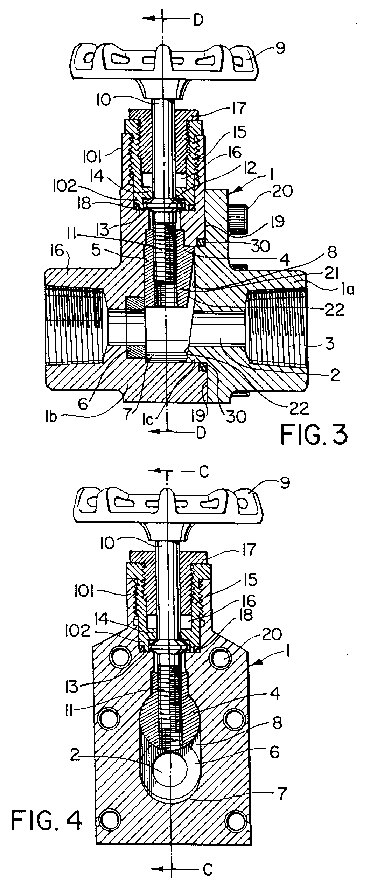

Referring once more to Figures 1 to 4, the valve body 1 has a main body portion lb which is closed on one side thereof by a removable closure plate la having a flat surface mating with a corresponding flat surface on said main body portion which are clamped together by bolts 20 and trapped seal 30 formed of a spiral wound standard steel gasket, the main body portion lb containing all the operational parts including the gate 4 and stem 10 and valve seat 6 and the cover plate la has a protuberance lc which locates in the eccentric valve chamber 8 which allows a very close fit; resists both lineal and radial shear stresses and also traps the seal 30 in all directions. The inner face of the protuberance lc thus constitutes the wall 22 of the chamber 8.

Thus, the gate valve of the present invention has valve ports which are completely open or totally covered when closed, has body parts which may be made of a material best suited to resist corrosive fluids or gases and are not just coated, will allow for the containment of high-pressure, high-temperature fluids or gases, provides for the stuffing box to be completely isolated from the body chamber except when the gate is travelling through the opposite open or closed condition, provides for interchangeable seats of material best suited for service conditioning of the valve, allows for the body and cover to be machined from a forging and thus from superior material, allows for changing of the packing, allows for close machining tolerance of all parts to allow the gate chamber to also be a guide for the gate and provides for close tolerances which ensure complete interchange of all parts, i.e. , all seats will fit any seat chamber. Further all body cavity and matching cover parts may be completely machined for fit to contain a gasket seal and to reduce shear stresses on bolting.

## Claims

1. A gate valve comprising a valve body (1)having a main body portion (1b) containing a valve chamber (8) completely open on one side wall of the valve body (1) such that the whole of the valve chamber (8) is exposed and accessible for machining thereof, and a neck portion (101) defined by a neck wall, said open side wall being machined to provide a flat mating surface surrounding said open valve chamber (8), said main body portion (1b) having inlet and outlet ports and a transverse passage (3) extending therebetween, a valve gate member (4) guided vertically in said valve chamber (8) and movable between an open position, in which said gate member (4) is above said transverse passage (3), and a closed position, in which said gate member (4) obstructs said passage (3) to prevent fluid flow therethrough, said valve gate member (4) having a smooth flat-faced downstream wall (5), which in the closed position seats on a flat-faced seat (6) surrounding said passage (3), and having a wedges shaped upstream wall (21), which cooperates with a wedge-shaped wall (22) in said chamber (8) to force the downstream wall (5) sealingly onto the flat-faced seat (6), a valve stem (10) guided in said neck portion (101), said valve stem (10) extending into said valve chamber (8), said valve stem (10) having a threaded lower end (11) cooperating with a threaded recess in said gate member (4), and said stem (10) being rotatable in a bearing means in said neck portion (101) to raise and lower said gate member (15) between said open and closed positions, said open side of said main body portion (1b) being closed by a removable closure plate (1a) having a flat surface mating with the corresponding flat surface on said main body portion (1b), clamping means (20) for clamping said closure plate (1a) firmly to said main body portion (1b), characterized in that said gate valve is suitable for use in high pressure steam systems and the like, only the portion of said valve body (1) surrounding said valve chamber (8) is open and surrounded by said flat mating surface, said neck wall is in the form of an integral, unbroken wall (101) completely surrounding said valve stem (10), said closure plate (1a) has a protuberance (1c) on an inner surface thereof, which is slidable into the open side of the valve chamber (8) so as to partially penetrate said valve chamber (8) and become snugly located therein, said mating flat surfaces of said closure plate (1a) and said main body portion (1b) enclose a recess surrounding the valve chamber (8), and a seal (30) is trapped in said recess surrounding the valve chamber (8) under the action of said clamping means (20) to prevent leakage of high pressure fluid from said valve chamber (8), whereby said closure member (1a) can be removed to expose the whole of the interior of said valve chamber (8) to permit machining thereof, and clamped in position on said main body portion (1b) to permit operation in high pressure steam systems and the like.

2. A gate valve as claimed in Claim 1, characterized in that said recess in which the seal (30) is trapped is defined by a recessed edge of the main body portion (1b) around the chamber (8) and a side wall of the protuberance (1c).

3. A gate valve as claimed in any preceding claim, characterized in that the closure plate (lb) includes one of said inlets and outlets.

4. A gate valve as claimed in any preceding claim, characterized in that said protuberance (1c) includes the wedge-shaped wall of said chamber.

5. A gate valve as claimed in any preceding claim, characterized in that said flat-faced seat (6) is an insert removably attached to said chamber (8) around said passage (3).

6. A gate valve as claimed in any preceding claim, characterized in that the closure plate (1a) is clamped to the main body portion (1b) by bolts (20).

7. A gate valve as claimed in any preceding claim, characterized in that said bearing means includes a stuffing box means (15) through which said valve stem (10) extends and having a packing (16) therein, a flange (102) downwardly extending from said stuffing box means (15) defining with the neck portion (101) a cavity, said flange being in sealing abutment with said neck portion (101), said stem (10) including an integral collar (12) located in said cavity between an upper seat (14) provided by said stuffing box means (15) and a lower seat (13) provided by said neck portion (101), said collar (12) having tapered shoulders which form self-aligning seals with said upper and lower seats (14, 13), whereby said collar (12) backseats on said upper and lower seats in the fully closed and fully opened positions of said valve gate member (4) to isolate said stuffing box means (15) from said fluid high-pressure to allow said packing (16) to be replaced both in the fully opened and fully closed positions of said valve gate member (4).

8. A gate valve as claimed in claim 7, characterized in that a sealing flange means (18) is trapped in a recess between said flange (102) and said neck portion (101).

9. A gate valve as claimed in claim 8, characterized in that the recess is in the bottom of said flange (102).

10. A gate valve as claimed in any one of claims 7 to 9, characterized in that the upper and lower seats (14, 13) are formed by shoulders on said stuffing box (15) and said neck portion (101) adjacent said valve stem (10) and have sealing line abutment with said tapered shoulders of said collar (12) in said opened and closed position of said valve gate member (4).

11. A gate valve as claimed in any one of claims 8 to 10, characterized in that said stuffing box means comprises a ductile seal bushing (110) having downwardly extending flanges (113) and defining with said neck portion (101) a stuffing box including said packing, said cavity having said collar (12) located therein and a retainer ring (111) adapted to be adjustably mounted in said neck portion (101) to apply downward direct pressure on said bushing (110) to effect a seal between said bushing (110) and said neck portion (101).

## Patentansprüche

1. Ein Schieberventil bestehend aus einem Ventilkörper (1), wovon ein Hauptkörperteil (1b) eine Ventilkammer (8) beinhaltet, die auf der einen Seitenwand des Ventilkörpers (1) völlig offen ist, wodurch die ganze Ventilkammer (8) freigelegt ist und maschinell bearbeitet werden kann, und ausserdem bestehend aus einem durch eine Halswand begrenzten Halsteil (101), wobei die obengenannte offene Seitenwand maschinell bearbeitet wird, um eine flache Berührungsfläche um die offene Ventilkammer herzustellen, und wobei das Hauptkörperteil (1b) Einlass- und Auslassöffnungen und einen dazwischen querlaufenden Verbindungsgang trägt, ausserdem bestehend aus einem Ventilschieberelement (4), das in der genannten Ventilkammer (8) vertikal geführt wird und sich hin und her bewegen kann zwischen einer offenen Stellung, wobei das Schieberelement (4) sich oberhalb des querlaufenden Verbindungsganges (3) befindet, und einer geschlossenen Stellung, wobei das Schieberelement (4) den Verbindungsgang (3) absperrt, um den Durchfluss von Flüssigkeit durch ihn zu verhindern, und das Ventilschieberelement (4) hat eine glatte, ebene, stromabwärts gerichtetete Wand (5), die in der gechlossenen Stellung auf einer flachen, den Verbindungsgang (3) umgebenden Auflagefläche (6) aufliegt, sowie eine keilförmige, stromaufwärts gerichtete Wand (21), die mit einer keilförmigen Wand (22) in der Kammer (8) zusammenwirkt, um die stromabwärts gerichtete Wand (5) dicht gegen die ebene Auflagefläche (6) zu drücken, und weiterhin bestehend aus einem in dem Halsteil (101) geführten Ventilschaft (10), der bis in die Ventilkammer (8) hineinragt und am unteren Ende (11) mit einem Gewinde ausgerüstet ist, das in eine Aussparung mit entsprechendem Gewinde in dem Schieberelement (4) eingreift, und dieser Ventilschaft (10) ist in einem Lager im Halsteil (101) drehbar geführt, um dadurch das Schieberelement (15) zwischen einer offenen und einer geschlossenen Stellung heben und senken zu können, und die offene Seite des Hauptkörperteils (1b) ist durch eine abnehmbare Platte abgeschlossen, die mit einer ebenen Fläche gegen eine entsprechende ebene Gegenfläche am Hauptkörperteil (1b) aufliegt, weiterhin eine Klemmvorrichtung (20) zum Festhalten der Schliessplatte (1a) gegen den Hauptkörperteil (1b), dadurch gekennzeichnet, dass das Schieberventil geeignet ist zum Einbau in Hochdruck- Dampfanlagen und ähnlichen Systemen, und nur der Teil des Ventilkörpers (1), der die Ventilkammer (8) umgibt, offen und von der ebenen Auflagefläche umgeben ist, und die Halswand hat die Form einer integralen, durchgehenden Wand (101) die den genannten Ventilschaft (10) völlig umschliesst, und die genannte Schliessplatte (1a) trägt einen Vorsprung (1c) auf einer Innenfläche, welcher in die offene Seite der Ventilkammer (8) gleitend eingreift und dabei in die Ventilkammer (8) teilweise hineinragt und dort genau hineinpasst, und die ebenen Auflageflächen der Schliessplatte (1a) und des Hauptkörperteils (1b) bilden eine Aussparung um die Ventilkammer (8) und eine Dichtung (30) ist in dieser um die Ventilkammer (8) herumlaufenden Aussparung unter der Wirkung der Klemmvorrichtung (20) festgehalten, um das Austreten von unter hohem Druck stehender Flüssigkeit aus der Ventilkammer (8) zu verhindern, und die Schliessplatte (1a) kann entfernt werden kann, um sich Zugang zu dem Innenraum der Ventilkammer (8) zu verschaffen, damit dieser Raum maschinell bearbeitet werden kann, bzw. die Schliessplatte am Hauptkörperteil (1b) befestigt werden kann, um den Betrieb des Ventils in Hochdruckdampfanlagen und ähnlichen Systemen zu gewährleisten.

2. Ein Schieberventil nach dem Anspruch 1, dadurch gekennzeichnet, dass die genannte Aussparung, worin die Dichtung (30) festgehalten ist, durch einen um die Kammer (8) herumlaufenden Absatz am Rande des Hauptkörperteils (1b) sowie durch eine Seitenwand des Vorsprungs (1c) gebildet wird.

3. Ein Schieberventil nach einem der vorgenannten Ansprüche, dadurch gekennzeichnet, dass die Schliessplatte (1b) mit einer der genannten Einlass- oder Auslassöffnungen ausgerüstet ist.

4. Ein Schieberventil nach einem der vorgenannten Ansprüche, dadurch gekennzeichnet, dass die keilförmige Wand der Kammer ein Teil des Vorsprungs (1c) ist.

5. Ein Schieberventil nach einem der vorgenannten Ansprüche, dadurch gekennzeichnet, dass die ebene Auflagefläche (6) ein ablösbar an die Kammer (8) angeschlossenes Einsatzteil ist, das den Verbindungsgang (3) umschliesst.

6. Ein Schieberventil nach einem der vorgenannten Ansprüche, dadurch gekennzeichnet, dass die Schliessplatte (1a) an dem Hauptkörperteil (1b) durch Bolzen (20) angeschlossen ist.

7. Ein Schieberventil nach einem der vorgenannten Ansprüche, dadurch gekennzeichnet, dass das Lager eine Stopfbüchse (15) beinhaltet, durch welche der Ventilschaft (10) verläuft, und dazu eine Abdichtung (16), und von der Stopfbüchse (15) ausgehend ein nach unten gerichteter Flansch (102) zusammen mit dem Halsteil (101) einen Hohlraum bildet, welcher Flansch abdichtend am Halsteil (101) anliegt, und genannter Ventilschaft (10) einen integralen Kragen (12) hat, der in dem Hohlraum zwischen einer von der Stopfbüchse (15) gebildeten oberen Sitzfläche (14) und einer am Halsteil (101) geformten unteren Sitzfläche (13) gehalten wird, und der obengenannte Kragen (12) schräge Randanschläge trägt, die selbsteinstellende Dichtungen mit den oberen und unteren Sitzflächen (14, 13) bilden, und der genannte Kragen (12) bei den Stellungen "völlig offen" und "völlig geschlossen" des Ventilschieberelements (4) gegen diese oberen und unteren Sitzflächen gedrückt wird, um dadurch die Stopfbüchse (15) von der Hochdruckflüssigkeit abzutrennen, damit die Packung (16) ausgetauscht werden kann, während das Ventilschieberelement (4) völlig offen oder völlig geschlossen ist.

8. Ein Schieberventil nach Anspruch 7, dadurch gekennzeichnet, dass ein Dichtungsflansch (18) in einer Aussparung zwischen dem Flansch (102) und dem Halsteil (101) festgehalten wird.

9. Ein Schieberventil nach Anspruch 8, dadurch gekennzeichnet, dass die Aussparung sich im unteren Teil des Flansches (102) befindet.

10. Ein Schieberventil nach einem der Ansprüche 7 bis 9, dadurch gekennzeichnet, dass die oberen und unteren Sitzflächen (14, 13) durch Randanschläge an der Stopfbüchse (15) sowie durch das neben dem Ventilschaft liegende Halsteil (101) gebildet sind, und bei den offenen und geschlossenen Stellungen des Ventilschieberelements (4) diese Sitzflächen abdichtend gegen die schrägen Randanschläge des Kragens (12) anliegen.

11. Ein Schieberventil nach einem der Ansprüche 8 bis 10, dadurch gekennzeichnet, dass die Stopfbüchse eine nachgiebige Dichtungsbüchse (110) mit nach unten gerichteten Flanschen (113) enthält und zusammen mit dem Halsteil (101) eine Stopfbüchse einschliesslich Packung bildet und der Kragen (12) im genannten Hohlraum gelagert ist, und ein Haltering (111) einstellbar gelagert im Halsteil (101) ist, um direkten nach unten gerichteten Druck auf die Büchse (110) auszuüben und dadurch eine Dichtung zwischen der Büchse (110) and dem Halsteil (101) herbeizuführen.

## Revendications

1. Une valve à cloison comprenant un corps de valve (1) dont la partie principale (1b) renferme une chambre de valve (8) complètement ouverte sur une paroi latérale du corps (1) de sorte que toute la chambre (8) est exposée et accessible pour fins d'usinage et un col (101) consititué par une paroi de col, ladite paroi latérale ouverte étant usinée en une surface plane d'accouplement entourant ladite chambre ouverte (8), ledit corps principal (1b) ayant des orifices d'entrée et de sortie et un passage transversal (3) entre les deux, une cloison (4) dirigée verticalement dans ladite chambre (8) et mobile entre une position ouverte, où ladite cloison se situe au-dessus du passage transversal (3), et une position fermée où ladite cloison (4) bloque ledit passage (3) pour empêcher l'écoulement de fluide à travers le passage, ladite cloison ayant une face plane lisse en aval (5) qui, en position fermée, s'applique sur un siège à face plane (6) entourant le passage (3), et ayant, une face en forme de cale en amont (21) qui coopère avec une paroi en forme de cale (22) dans ladite chambre (8) pour forcer la paroi en aval (5) de faêon hermétique contre le siège à face plane (6), une tige de valve (10) se prolongeant dans ladite chambre de valve (8), ladite tige de valve (10) ayant l'extrémité inférieure filetée (11) et coopèrant avec un alésage fileté dans ladite cloison (4), et ladite tige (10) pouvant tourner, maintenue par un palier dans ledit col (101), afin de lever ou baisser ladite cloison (4) en position ouverte ou fermée, ledit côté ouvert du corps de la valve (1b) étant fermé par une plaque amovible de fermeture (1a) ayant une face plane s'accouplant à la surface plane correspondante du corps de la valve (1b), des moyens de serrage pour serrer ladite plaque (1a) fermement audit corps de valve (1b), caractérisée en ce que ladite valve à cloison convienne à son utilisation dans les systèmes de vapeur à haute pression et autres systèmes similaires, seule la portion dudit corps de valve (1) entourant ladite chambre de valve (8) est ouverte et entourée de ladite surface plane d'accouplement, ladite paroi de col est constituée par une paroi intégrale continue (101) entourant complètement ladite tige de valve (10), ladite plaque amovible (1a) ayant une protubérance (1c) sur la face interne qui s'insère dans la partie ouverte de la chambre de valve (8) de façon à pénétrer partiellement dans ladite chambre (8) et s'y loger bien ajustée, lesdites surfaces planes de ladite plaque (1a) et dudit corps de valve (1b) renferment une rainure entourant la chambre de valve (8) et un joint d'étanchéité (30) est coincé dans cette rainure entourant la chambre de valve (8) par l'action des moyens de serrage (20) afin d'empêcher toute fuite de fluide à haute pression de ladite chambre de valve (8) de sorte que la plaque (1a) peut etre ôtée pour exposer tout l'intérieur de ladite chambre de valve (8) pour fins d'usinage et reserrée en place sur la surface du corps de valve (1b) afin d'en permettre l'utilisation dans les systèmes de vapeur à haute pression.

2. Une valve à cloison selon la revendication 1 caractérisée par le fait que ladite rainure dans laquelle le joint (30) est coincé est définie par une bordure en retrait de la partie du corps de valve (1b) autour de la chambre de valve (8) et un rebord de la protubérance (1c).

3. Une valve à cloison selon selon l'une quelconque des revendications précédentes caractérisée par le fait que la plaque (1b) comprend un des orifices d'entrée ou de sortie.

4. Une valve à cloison selon l'une quelconque des revendications précédentes caractérisée par le fait que ladite protubérance (1c) inclut la paroi en forme de cale de ladite chambre.

5. Une valve à cloison selon l'une quelconque des revendications précédentes caractérisée par le fait que ledit siège à face plane (6) est une pièce insérée fixée de façon détachable à ladite chambre (8) autour dudit passage (3).

6. Une valve à cloison selon l'une quelconque des revendications précédentes caractérisée par le fait que la plaque mobile de fermeture (1a) est serrée sur le corps principal (1b) par des boulons (20).

7. Une valve à cloison selon l'une quelconque des revendications précédentes caractérisée par le fait que ledit palier de guidage comprend un boîtier de presse-étoupe (15) à travers lequel passe la tige de valve (10) et contenant un presse-étoupe (16), une collerette (102) s'insérant vers le bas dans le boîtier de presse-étoupe (15) formant une cavité dans le col (101), ladite collerette ayant un rebord se calant de façon hermétique sur le col (101), ladite tige (10) comprenant un collier intégral (12) logé dans ladite cavité entre un siège supérieur (14) formé par ledit boîtier de presse-étoupe (15) et un siège inférieur (13) formé par ledit col (101), ledit collier (12) ayant des faces en biseau qui agissent comme des joints étanches auto-alignés aux sièges supérieur et inférieur (14, 13) de sorte que ledit collier (12) est calé entre les sièges supérieur et inférieur en position totalement fermée ou totalement ouverte de ladite cloison (4) afin d'isoler ledit boîtier de presse-étoupe (15) dudit fluide à haute pression permettant le remplacement dudit presse-étoupe (16) tant en position totalement ouverte qu'en position totalement fermée de ladite cloison (4).

8. Une valve à cloison selon la revendication 7 caractérisée par le fait que des moyens d'étanchéité pour la collerette (18) sont coincée dans un espace entre la collerette (102) et ledit col (101).

9. Une valve à cloison selon la revendication 8 caractérisée par le fait que la rainure se trouve dans le fond de ladite bague de serrage (102).

10. Une valve à cloison selon l'une quelconque des revendications 7 à 9 caractérisée par le fait que les sièges supérieur et inférieur (14, 13) sont formés par des rebords sur ledit boîtier de presse-étoupe (15) et ledit col (101) adjacents à ladite tige de valve (10) et sont en contact étanche avec les faces en biseau dudit collier (12) dans lesdites positions ouverte et fermée de ladite cloison (4).

11. Une valve à cloison selon l'une quelconque des revendications 8 à 10 caractérisée par le fait que ledit boîtier de presse-étoupe comprend une bague ductile d'étanchéité ayant une face (113) dirigée vers le bas et formant avec ledit col (101), un boîtier de presse-étoupe comprenant ledit presse-étoupe, ledit espace renfermant ledit collier (12) et un anneau de retenue (111) prévu pour une mise en place réglable dans ledit col (101) de façon à exercer une pression directe vers le bas sur ladite bague d'étanchéité (110) pour former un joint étanche entre ladite bague (110) et le col (101).
